Europäisches Patentamt

European Patent Office

Office européen des brevets

(19)

(11) Veröffentlichungsnummer: **0 120 205**
**B1**

(12) **EUROPÄISCHE PATENTSCHRIFT**

(45) Veröffentlichungstag der Patentschrift:
24.02.88

(51) Int. Cl.⁴: **G 01 B 21/02**

(21) Anmeldenummer: **84100700.8**

(22) Anmeldetag: **24.01.84**

(54) Gekapselte lichtelektrische Messeinrichtung.

(30) Priorität: **26.03.83 DE 3311118**

(43) Veröffentlichungstag der Anmeldung:
**03.10.84 Patentblatt 84/40**

(45) Bekanntmachung des Hinweises auf die Patenterteilung:
**24.02.88 Patentblatt 88/8**

(84) Benannte Vertragsstaaten:
**AT CH DE FR GB IT LI NL SE**

(56) Entgegenhaltungen:
**DE-A-3 109 084**
**DE-B-2 846 768**
**GB-A-1 540 592**
**US-A-4 215 480**
**US-A-4 387 300**

(73) Patentinhaber: **Dr. Johannes Heidenhain GmbH,
Nansenstrasse 17, D-8225 Traunreut (DE)**

(72) Erfinder: **Ernst, Alfons, Dipl.- Ing., Traunring 62,
D-8225 Traunreut (DE)**

## Beschreibung

Die Erfindung betrifft eine gekapselte lichtelektrische Meßeinrichtung gemäß dem Oberbegriff des Anspruchs 1.

Derartige lichtelektrische Meßeinrichtungen werden beispielsweise bei Werkzeugmaschinen zur Messung von Längen oder Winkeln eingesetzt und müssen daher gegen Umwelteinflüsse in Form von Öl, Kühlwasser, Bearbeitungsspänen und Staub wirksam geschützt werden. Bei bekannten Langenmeßeinrichtungen (z. B. DE-PS 28 46 768) weist das Gehäuse für den Maßstab und die Abtasteinheit einen in Längsrichtung verlaufenden Schlitz auf, der durch elastische Dichtlippen verschlossen ist, durch die ein Mitnehmer fur die Abtasteinheit hindurchgreift. Diese Dichtlippen verhindern zwar zuverlässig das Eindringen von Flüssigkeiten und Spänen in das Innere des Gehäuses, können aber Flüssigkeiten in Form von Dämpfen und Nebeln, die im Inneren des Gehäuses kondensieren, nicht vollständig fernhalten, so daß durch Bildung von Flüssigkeitstropfen mit der optischen Wirkung von Sammellinsen auf den Oberflächen das Maßstabs und einer Abtastplatte der Abtasteinheit der Strahlengang der lichtelektrischen Abtastung der Teilung des Maßstabs gestört wird, wodurch Meßungenauigkeiten auftreten können. Außerdem besteht bei den gedruckten Schaltungen mit den Photosensoren in der Abtasteinheit die Gefahr eines elektrischen Kurzschlusses durch Flüssigkeitseinwirkung.

Der Erfindung liegt die Aufgabe zugrunde, eine derartige Meßeinrichtung so auszubilden, daß die Meßgenauigkeit auch in einer Umgebung mit starkem Flüssigkeitsnebel erhalten bleibt.

Diese Aufgabe wird erfindungsgemäß durch die Merkmale des Anspruchs 1 gelöst.

Die mit der Erfindung erzielten Vorteile bestehen insbesondere darin, daß mit einfachen Mitteln eine lichtelektrische Meßeinrichtung auch unter ungünstigen Bedingungen, beispielsweise bei allseitig geschlossenen Bearbeitungszentren, ohne Beeinträchtigung der Meßgenauigkeit einsetzbar ist.

Vorteilhafte Ausbildungen der Erfindung entnimmt man den Unteransprüchen.

Ausführungsbeispiele der Erfindung werden anhand der Zeichnung näher erläutert.

Es zeigen

Figur 1 eine gekapselte Längenmeßeinrichtung nach dem Auflichtmeßprinzip,

Figur 2 eine gekapselte Längenmeßeinrichtung nach dem Durchlichtmeßprinzip und

Figur 3 eine modifizierte Längenmeßeinrichtung nach Figur 2.

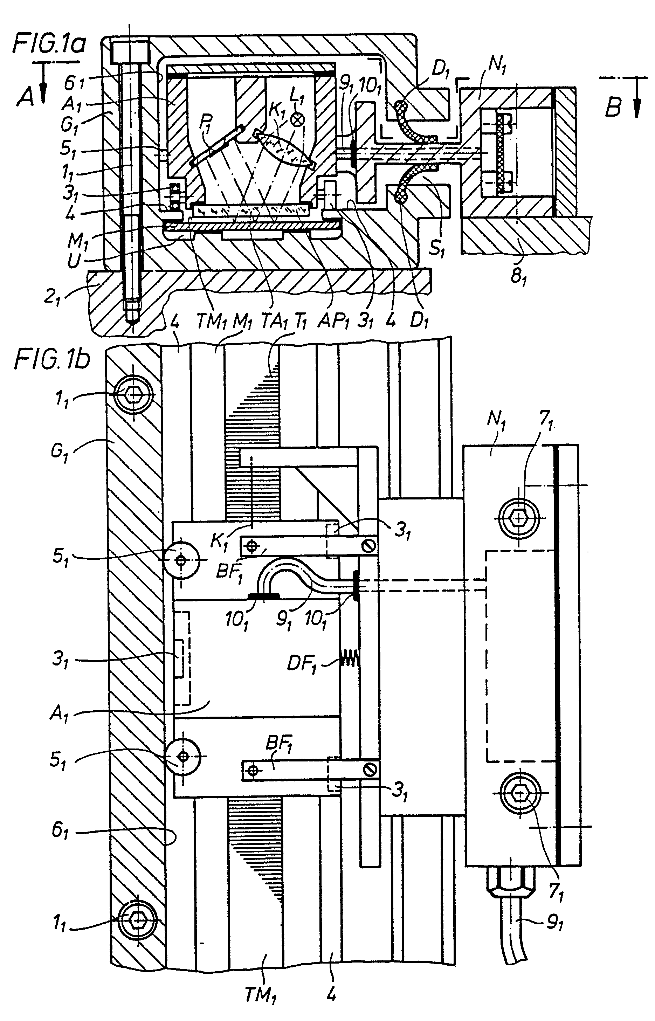

In Figur 1a, b ist in einem Querschnitt und in einem Längsschnitt eine gekapselte inkrementale Längenmeßeinrichtung nach dem Auflichtmeßprizip dargestellt, deren Gehäuse $G_1$ mittels Schrauben $1_1$ an einem Bett $2_1$ einer Werkzeugmaschine befestigt ist. In einer Nut U des Gehäuses $G_1$ ist ein Maßstab $M_1$ angeordnet, dessen Teilung $T_1$ von einer Abtasteinheit $A_1$ abgetastet wird, die eine Lichtquelle $L_1$, einen Kondensor $K_1$, eine Abtastplatte $AP_1$ mit einer nicht gezeigten Teilung, die mit der Teilung $T_1$ des Maßstabs $M_1$ übereinstimmt, und ein Photoelement $P_1$ aufweist. Die Abtasteinheit $A_1$ ist mittels Rollen $3_1$ und zweier Blattfedern $BF_1$ auf einer Grundfläche 4 und mittels Rollen $5_1$ und einer Druckfeder $DF_1$ auf einer Seitenfläche $6_1$ des Gehäuses $G_1$ geführt. Das Gehäuse $G_1$ weist in seiner Längserstreckung einen Schlitz $S_1$ auf, der durch dachförmig geneigte Dichtlippen $D_1$ verschlossen ist, durch die ein Mitnehmer $N_1$ mit einem schwertförmigen Mittelstück hindurchgreift. Der Mitnehmer $N_1$ ist mittels Schrauben $7_1$ an einem relativ zum Bett $2_1$ verschiebbaren Schlitten $8_1$ der Werkzeugmaschine befestigt und mittels einer Kupplung $K_1$ in Form eines in Meßrichtung steifen Drahtes mit der Abtasteinheit $A_1$ verbunden. Bei der Relativverschiebung der Maschinenteile $2_1$, $8_1$ werden bei der photoelektrischen Abtastung der Teilung $T_1$ des Maßstabs $M_1$ durch die Abtasteinheit $A_1$ Meßsignale erzeugt, die über Leitungen $9_1$ durch den Mitnehmer $N_1$ einer nicht dargestellten Auswerte-/Anzeigeeinheit zugeführt werden; die Ausgänge der Leitung $9_1$ aus der Abtasteinheit $A_1$ und aus dem Mitnehmer $N_1$ im Inneren des Gehäuses $G_1$ sind mit Dichtungen $10_1$ abgedichtet.

Dichtlippen $D_1$ verhindern zwar ein Eindringen von Flüssigkeiten und von Bearbeitungsspänen in das Innere des Gehäuses $G_1$, können jedoch Flüssigkeiten in Form von Dämpfen und Nebeln, die im Inneren des Gehäuses $G_1$ in Tropfenform kondensieren, nicht vollständig fernhalten. Um zu verhindern, daß sich Flüssigkeitstropfen mit der optischen Wirkung von Sammellinsen auf der Teilungsfläche $TM_1$ des Maßstabs $M_1$ und den Oberflächen der Elemente $L_1$, $K_1$, $AP_1$, $P_1$ der Abtasteinheit $A_1$ bilden, die den Strahlengang der photoelektrischen Abtastung stören, ist einmal die Abtasteinheit $A_1$ durch die Abtastplatte $AP_1$ hermetisch verschlossen und zum anderen ist der parallele Abstand zwischen der Teilungsfläche $TM_1$ des Maßstabs $M_1$ und der dieser gegenüberliegenden Teilungsfläche $TA_1$ der Abtastplatte $AP_1$ so gering bemessen, daß aus den gegebenenfalls auf der Teilungsfläche $TM_1$ des Maßstabs $M_1$ befindlichen Flüssigkeitstropfen im Bereich der Abtastplatte $AP_1$ der Abtasteinheit $A_1$ eine durchgehend homogene Flüssigkeitsschicht gebildet wird; der Abstand liege etwa unter 0,5 mm.

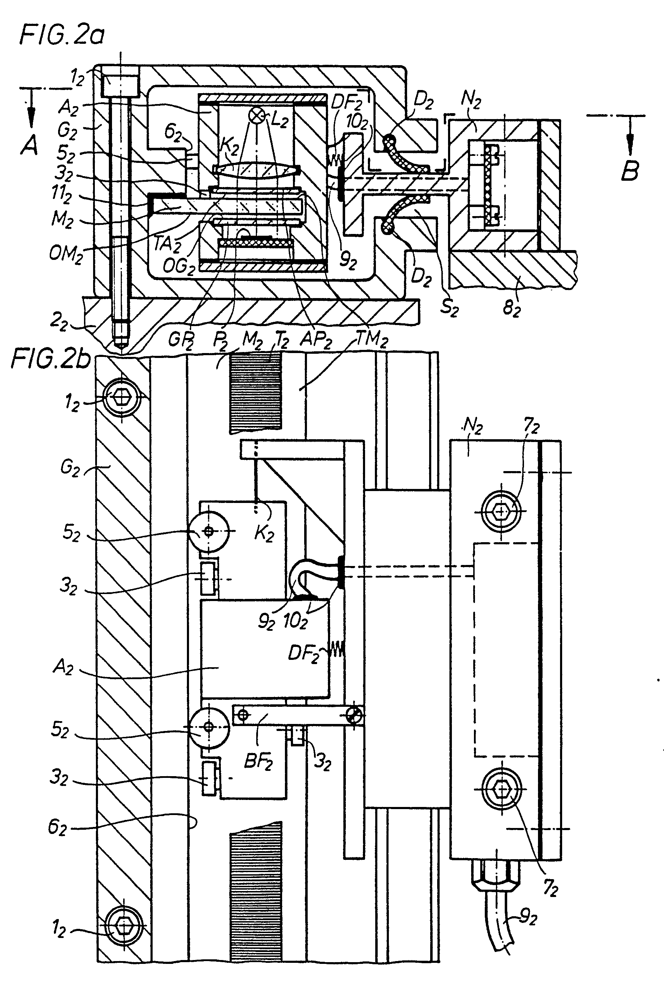

In Figur 2a, b ist in einem Querschnitt und in einem Längsschnitt eine gekapselte inkrementale Längenmeßeinrichtung nach dem Durchlichtmeßprinzip dargestellt, die im wesentlichen mit der Längenmeßeinrichtung nach Figur 1 übereinstimmt und deren Elemente mit den gleichen Bezugszeichen, aber mit einem unteren Index "2" versehen sind. Im Unterschied zur Längenmeßeinrichtung nach Figur 1 ist ein Maßstab $M_2$ mittels einer Klebeschicht 11 an einer Innenfläche des Gehäuses $G_2$ befestigt.

Eine Abtasteinheit $A_2$ ist mittels Rollen $3_2$ und einer Blattfeder $BF_2$ auf der Teilungsfläche $TM_2$ des Maßstabs $M_2$ geführt und umgreift den Maßstab $M_2$ auf beiden Seiten.

Zur Vermeidung einer Störung des Strahlengangs der photoelektrischen Abtastung durch Flüssigkeitstropfen sind einmal der obere Teil der Abtasteinheit $A_2$ mit einer Lichtquelle $L_2$ und einem Kondensor $K_2$ durch eine Abtastplatte $AP_2$ und der untere Teil der Abtasteinheit $A_2$ mit einem Photoelement $P_2$ durch eine Glasplatte $GP_2$ hermetisch verschlossen. Zum anderen sind die parallelen Abstände zwischen der Teilungsfläche $TM_2$ des Maßstabs $M_2$ und der dieser gegenüberliegenden Teilungsfläche $TA_2$ der Abtastplatte $AP_2$ sowie zwischen der der Teilungsfläche $TM_2$ gegenüberliegenden Oberfläche $OM_2$ des Maßstabs $M_2$ und der dieser gegenüberliegenden Oberfläche $OG_2$ der Glasplatte $GP_2$ so gering bemessen, daß aus den gegebenengfalls auf der Teilungsfläche $TM_2$ und auf der Oberflächen $OM_2$ des Maßstabs $M_2$ befindlichen Flüssigkeitstropfen im Bereich der Abtastplatte $AP_2$ der Abtasteinheit $A_2$ eine durchgehend homogene Flüssigkeitsschicht gebildet wird; der Abstand liege etwa unter 0,5 mm.

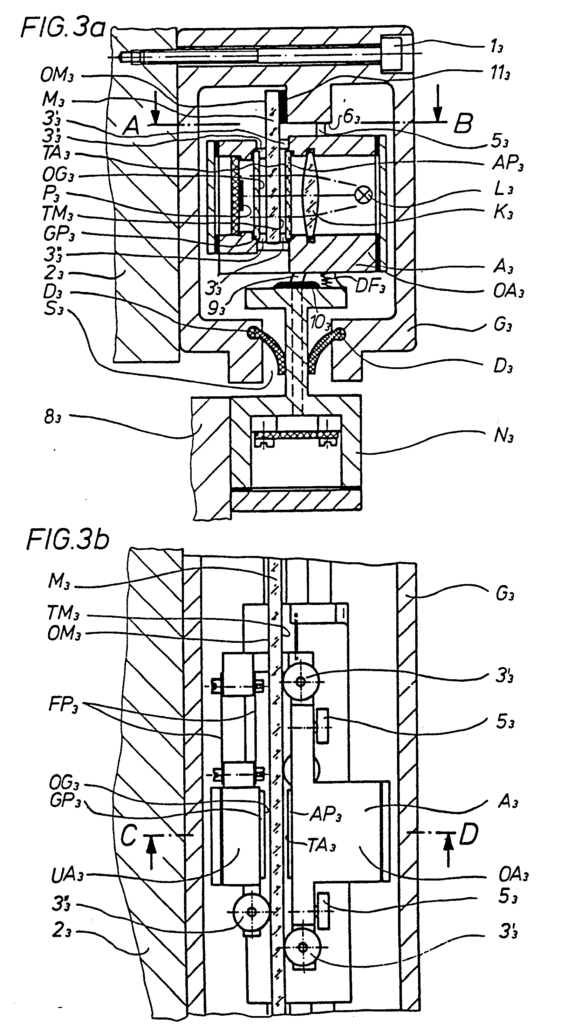

In Figur 3a, b ist in einem Querschnitt und in einem Längsschnitt eine gekapselte inkrementale Längenmeßeinrichtung ebenfalls nach dem Durchlichtmeßprinzip dargestellt, die im wesentlichen mit der Längenmeßeinrichtung nach Figur 2 übereinstimmt und deren Elemente mit den gleichen Bezugszeichen, aber mit einem unteren Index "3" versehen sind. Im Unterschied zur Längenmeßeinrichtung nach Figur 2 besteht eine Abtasteinheit $A_3$ aus einem oberen Abtastteil $OA_3$ und aus einem unteren Abtasteil $UA_3$, die über ein Gelenk oder ein Federparallelogramm $FP_3$ miteinander verbunden sind. Der obere Abtastteil $OA_3$ ist mittels Rollen $3_3{}'$ auf einer Teilungsfläche $TM_3$ eines Maßstabs $M_3$ und der untere Abtastteil $UA_3$ mittels Rollen $3_3{}''$ auf einer der Teilungsfläche $TM_3$ gegenüberliegenden Oberfläche $OM_3$ des Maßstabs $M_3$ geführt, so daß auch bei größeren Toleranzen der Dicke des Maßstabs $M_3$ ein definierter geringer paralleler Abstand zwischen der Teilungsfläche $TM_3$ des Maßstabs $M_3$ und einer Teilungsfläche $TA_3$ einer Abtastplatte $AP_3$ des oberen Abtastteils $OA_3$ sowie zwischen der der Teilungsfläche $TM_3$ gegenüberliegenden Oberfläche $OM_3$ des Maßstabs $M_3$ und einer Oberfläche $OG_3$ einer Glasplatte $GP_3$ des unteren Abtastteils $UA_3$ der Abtasteinheit $A_3$ zur Ausbildung einer durchgehend homogenen Flüssigkeitsschicht im Bereich der Abtastplatte $AP_3$ der Abtasteinheit $A_3$ gewährleistet ist. Der obere Abtastteil $OA_3$ mit einer Lichtquelle $L_3$ und einem Kondensor $K_3$ ist durch die Abtastplatte $AP_3$ und der untere Abtastteil $UA_3$ der Abtasteinheit $A_3$ mit einem Photoelement $P_3$ durch die Glasplatte $GP_3$ hermetisch verschlossen.

Der Abstand zwischen den Flächen TM, TA bzw. OM, OG des Maßstabs M und der Abtasteinheit A wird zweckmäßig so gering gewählt, daß auch eine eventuell auftretende Verschmutzung der Flüssigkeit keinen wesentlichen Einfluß auf die photoelektrische Abtastung hat. Durch die hermetische Kapselung der Abtasteinheit A ist ein elektrischer Kurzschluß in den gedruckten Schaltungen in der Abtasteinheit A durch Flüssigkeitseinwirkung ausgeschlossen.

Die Abtasteinheiten $A_1$; $A_2$ sowie der obere Abtastteil $OA_3$ und der untere Abtastteil $UA_3$ der Abtasteinheit $A_3$ weisen jeweils ein mit wenigstens einem Deckel verschlossenes Gehäuse zur Aufnahmne wenigstens der Beleuchtungseinheit L, K sowie von lichtelektrischen Elementen P auf.

Die Erfindung ist auch bei gekapselten lichtelektrischen Winkelmeßeinrichtungen sowie bei gekapselten Meßeinrichtungen mit Erfolg einsetzbar, deren Gehäuseöffnung mit einer beliebigen Dichtung verschlossen ist.

## Patentansprüche

1. Gekapselte lichtelektrische Meßeinrichtung zum Messen oder Einstellen der Relativlage zweier Objekte, bei der ein Gehäuse (G) zur Aufnahme eines Maßstabs (M) und einer die Teilung des Maßstabs (M) abtastenden, eine Beleuchtungseinheit (L, K) aufweisenden Abtasteinheit (A) mit dem einen zu messenden Objekt (2) verbunden ist und eine mit Dichtelementen (D) verschlossene Öffnung (S) aufweist, durch die ein Mitnehmer (N) die Abtasteinheit (A) mit dem anderen zu messenden Objekt (8) verbindet, dadurch gekennzeichnet, daß die Abtasteinheit (A) hermetisch verschlossen ist, daß der wenigstens einen von den Lichtstrahlen der Beleuchtungseinheit (L, K) beaufschlagten Fläche (TM, OM) des Maßstabs (M) jeweils eine parallele lichtdurchlässige Fläche (TA, OG) der Abtasteinheit (A) zugeordnet ist und daß der Abstand zwischen den Flächen (TM, TA bzw. OM, OG) des Maßstabs (M) und der Abtasteinheit (A) so gering bemessen ist, daß aus gegebenenfalls auf der wenigstens einen Fläche (TM, OM) des Maßstabs (M) befindlichen Flüssigkeitstropfen im Bereich der Abtasteinheit (A) eine durchgehend homogene, benetzende Flüssigkeitsschicht gebildet wird.

2. Meßeinrichtung nach Anspruch 1, dadurch gekennzeichnet, daß zur Erzielung eines Benetzungseffekts der Abstand zwischen den Flächen (TM, TA bzw. OM, OG) des Maßstabs (M) und der Abtasteinheit (A) kleiner als 0,5 mm ist.

3. Meßeinrichtung nach Anspruch 1, dadurch gekennzeichnet, daß die Abtasteinheit ($A_3$) einen oberen Abtastteil ($OA_3$) und einen unteren Abtastteil ($UA_3$) aufweist, die beweglich miteinander verbunden sind, und daß der obere Abtastteil ($OA_3$) auf der Teilungsfläche ($TM_3$) und der untere Abtastteil ($UA_3$) auf der der

Teilungsfläche $(TM_3)$ gegenüberliegenden Fläche $(OM_3)$ des Maßstabs $(M_3)$ geführt sind.

4. Meßeinrichtung nach Anspruch 3, dadurch gekennzeichnet, daß der obere Abtastteil $(OA_3)$ und der untere Abtastteil $(UA_3)$ durch ein Federparallelogramm $(FP_3)$ oder ein Gelenk miteinander verbunden sind.

5. Meßeinrichtung nach Anspruch 1, dadurch gekennzeichnet, daß die Abtasteinheit $(A_1)$ ein mit wenigstens einem Deckel hermetisch verschlossenes Gehäuse zur Aufnahme wenigstens der Beleuchtungseinheit $(L_1, K_1)$ und von lichtelektrischen Elementen $(P_1)$ aufweist, dessen eine Wandung durch eine Abtastplatte $(AP_1)$ gebildet ist.

6. Meßeinrichtung nach den Ansprüchen 1 und 3, dadurch gekennzeichnet, daß ein oberer Abtastteil $(OA_2; OA_3)$ der Abtasteinheit $(A_2; A_3)$ ein mit wenigstens einem Deckel hermetisch verschlossenes Gehäuse zur Aufnahme wenigstens der Beleuchtungseinheit $(L_2, K_2; L_3, K_3)$ aufweist, dessen eine Wandung durch eine Abtastplatte $(AP_2; AP_3)$ gebildet ist, und daß ein unterer Abtastteil $(UA_2; UA_3)$ der Abtasteinheit $(A_2; A_3)$ ein mit wenigstens einem Deckel hermetisch verschlossenes Gehäuse zur Aufnahme wenigstens eines lichtelektrischen Elements $(P_2; P_3)$ aufweist, dessen eine Wandung durch eine transparente Platte $(GP_2; GP_3)$ gebildet ist.

## Claims

1. Enclosed photoelectric measuring device for the measurement or setting of the relative position of two objects, in which device a housing (G) to receive a scale (M) and a scanning unit (A) which scans the graduation of the scale (M) and which exhibits an illumination unit (L, K) is connected to one of the objects (2) to be measured and exhibits an opening (S), which is closed by sealing elements (D) and through which a driver (N) connects the scanning unit (A) to the other object (8) to be measured, characterized in that the scanning unit (A) is hermetically sealed, in that a parallel light-transmitting surface (TA, OG) of the scanning unit (A) is associated in each instance with the at least one surface (TM, OM) of the scale (M) which is acted upon by the light rays of the illumination unit (L, K), and in that the spacing between the surfaces (TM, TA or OM, OG) of the scale (M) and the scanning unit (A) is dimensioned to be so small that a continuously homogeneous, wetting liquid layer is formed from liquid drops which may possibly be situated on the at least one surface (TM, OM) of the scale (M) in the region of the scanning unit (A).

2. Measuring device according to Claim 1, characterized in that, in order to achieve a wetting effect, the spacing between the surfaces (TM, TA or OM, OG) of the scale (M) and the scanning unit (A) is smaller than 0.5 mm.

3. Measuring device according to Claim 1, characterized in that the scanning unit $(A_3)$ exhibits an upper scanning part $(OA_3)$ and a lower scanning part $(UA_3)$, which are movably connected to one another, and in that the upper scanning part $(OA_3)$ is guided on the graduation surface $(TM_3)$ and the lower scanning part $(UA_3)$ is guided on the surface $(OM_3)$ of the scale $(M_3)$ which is situated opposite the graduation surface $(TM_3)$.

4. Measuring device according to Claim 3, characterized in that the upper scanning part $(OA_3)$ and the lower scanning part $(UA_3)$ are connected to one another by a spring parallelogram $(FP_3)$ or a joint.

5. Measuring device according to Claim 1, characterized in that the scanning unit $(A_1)$ exhibits a housing, hermetically sealed by at least one cover, to receive at least the illumination unit $(L_1, K_1)$ and photoelectric elements $(P_1)$, a wall of which housing is formed by a scanning plate $(AP_1)$.

6. Measuring device according to Claims 1 and 3, characterized in that an upper scanning part $(OA_2; OA_3)$ of the scanning unit $(A_2; A_3)$ exhibits a housing, hermetically sealed by at least one cover, to receive at least the illumination unit $(L_2, K_2; L_3, K_3)$, a wall of which housing is formed by a scanning plate $(AP_2; AP_3)$, and in that a lower scanning part $(UA_2; UA_3)$ of the scanning unit $(A_2; A_3)$ exhibits a housing, hermetically sealed by at least one cover, to receive at least one photoelectric element $(P_2; P_3)$, a wall of which housing is formed by a transparent plate $(GP_2; GP_3)$.

## Revendications

1. Dispositif de mesure photoélectrique blindé pour mesurer ou régler la position relative de deux objets, dans lequel un boîtier (G), renfermant une règle graduée (M) et une unité de balayage (A) explorant la graduation de la règle (M) et comportant une unité d'éclairage (L, K) est raccordé à l'un des objets (2) à mesurer et comporte une ouverture (S) fermée par des éléments d'étanchéité (D) et à travers laquelle un entraîneur (N) relie l'unité de balayage (A) à l'autre objet (8) à mesurer, caractérisé par le fait que l'unité de balayage (A) est fermée hermétiquement, qu'à au moins l'une des surfaces (TM, OM) de la règle graduée (M), recevant les rayons lumineux de l'unité d'éclairage (L, K), est respectivement associée une surface transparente parallèle (TA, OG) de l'unité de balayage (A) et que la distance entre les surfaces (TM, TA et OM, OG) de la règle graduée (M) et de l'unité de balayage (A) est suffisamment faible pour qu'à partir des gouttes de liquide se trouvant éventuellement sur au moins l'une des surfaces (TM, OM) de la règle graduée (M), il se forme une couche de liquide mouillante parfaitement homogène dans la zone de l'unité de balayage (A).

2. Dispositif de mesure selon la revendication 1, caractérisé par le fait que pour obtenir un effet mouillant, la distance entre les surfaces (TM, TA et OM, OG) de la règle graduée (M) et de l'unité de balayage (A) est inférieure à 0,5 mm.

3. Dispositif de mesure selon la revendication 1, caractérisé par le fait que l'unité de balayage $(A_3)$ comprend une partie d'exploration supérieure $(OA_3)$ et une partie d'exploration inférieure $(UA_3)$ qui sont mutuellement raccordées de façon mobile et que la partie d'exploration supérieure $(OA_3)$ est guidée sur la surface $(TM_3)$ de la graduation et la partie d'exploration inférieure $(UA_3)$ sur la surface $(OM_3)$ de la règle graduée $(M_3)$ qui est opposée à la surface $(TM_3)$ de la graduation.

4. Dispositif de mesure selon la revendication 3, caractérisé par le fait que la partie d'exploration supérieure $(OA_3)$ et la partie d'exploration inférieure $(UA_3)$ sont mutuellement raccordées par un parallélogramme à ressort $(FP_3)$ ou une articulation.

5. Dispositif de mesure selon la revendication 1, caractérisé par le fait que l'unité de balayage $(A_1)$ comprend un boîtier hermétiquement fermé par au moins un couvercle, renfermant au moins l'unité d'éclairage $(L_1, K_1)$ et des éléments photoélectriques $(P_1)$ et dont une paroi est formée par une plaque d'exploration $(AP_1)$.

6. Dispositif de mesure selon les revendications 1 et 3, caractérisé par le fait qu'une partie d'exploration supérieure $(OA_2; OA_3)$ de l'unité de balayage $(A_2; A_3)$ comprend un boîtier hermétiquement fermé par au moins un couvercle, renfermant au moins l'unité d'éclairage $(L_2, K_2 ; L_3, K_3)$ et dont une paroi est formée par une plaque d'exploration $(AP_2; AP_3)$, et qu'une partie d'exploration inférieure $(UA_2; UA_3)$ de l'unité de balayage $(A_2; A_3)$ comprend un boîtier hermétiquement fermé par au moins un couvercle, renfermant au moins un élément photoélectrique $(P_2; P_3)$ et dont une paroi est formée par une plaque transparente $(GP_2; GP_3)$.

**FIG.1a**

A ↓  B ↓

$6_1$
$A_1$
$G_1$
$5_1$
$1_1$
$3_1$
4
$M_1$
U

$P_1$  $K_1$  $L_1$  $9,10_1$  $D_1$  $N_1$

$S_1$  $8_1$

$2_1$

4  $TM_1$ $M_1$  $TA_1$ $T_1$  $AP_1$ $3_1$  4  $D_1$

**FIG.1b**

$1_1$
$G_1$
$5_1$
$3_1$
$A_1$
$5_1$
$6_1$
$1_1$

$K_1$
$BF_1$
$10_1$  $9_1$  $10_1$
$DF_1$
$BF_1$
$3_1$

$N_1$  $7_1$
$3_1$
$7_1$
$9_1$

$TM_1$  4

1

FIG.2a

FIG.2b

3

FIG.3a

FIG.3b